# EUROPEAN PATENT APPLICATION

(11) **EP 2 393 002 A2**
(43) Date of publication of application: **07.12.2011**
(21) Application number: 11165778.9
(22) Date of filing: 12.05.2011
(51) Int. Cl.: G06F 3/14

(54) **Communication method, information terminal apparatus, display apparatus, and communication system comprising these**

(30) Priority: 14.05.2010 JP 2010112221
(71) Applicant: Funai Electric Co., Ltd., Daito-shi Osaka 574-0013 (JP)
(72) Inventor: Suzuki, Yoshihiro, Daito-shi Osaka 574-0013 (JP)
(74) Representative: Grünecker, Kinkeldey, Stockmair & Schwanhäusser

(57) **Abstract**

A display apparatus 10 and an information terminal apparatus 20 perform communication via a network. A display position of data to be displayed on a display unit 11 of the display apparatus 10 is input to a terminal input unit 25 of the information terminal apparatus 20. Both a data ID for identifying the data and position information for indicating the display position of the data are transmitted from the information terminal apparatus 20 to the display apparatus 10. The data identified by the ID information is displayed on the display unit 11 of the display apparatus 10 on the basis of the position information.

## Description

### BACKGROUND OF THE INVENTION

### 1. Field of the Invention

The present invention relates to a communication method, an information terminal apparatus, a display apparatus, and a communication system comprising these.

### 2. Description of Related Art

One of information communication via the Internet is an electronic display board. The electronic display board is also called a bulletin board system (BBS) and is generally created on a specific Web page on the Internet. A large number of unspecified users can access an electronic display board on the Internet using Web browsers. Users can post information on the board, read the posted information, and post comments on the information. Thus, the electronic display boards are used as a communication tool enabling a real-time information exchange such as a virtual message board, a venue for public discussions or a chat room.

In many of such electronic display boards, the information posted by users is displayed on the display screen in order of posting and the users are usually not able to specify the display position of the posted information. For a user, however, the display position of the information posted on the electronic display board is sometimes important. For instance, if a user intends to post a comment on the information shown on the electronic display board, the displaying of information either at a position close to the displayed information or in a space provided for writing a comment to the displayed information enables the user to recognize the information and the posted comment.

According to an electronic display system disclosed in Laid-Open Japanese Patent Application Publication No. 2005-11318, when a user intends to post a comment, the user specifies a contents-ID indicating the target, which the comment is posted, from the display screen of the system and inputs the contents-ID together with the information to be posted, and thereby the user is able to display the information in the comment column related to the contents.

Further, an electronic calendar displayed on a Web page is such that, when multiple users use the electronic calendar, the users are expected to post information by relating it to the position on the display screen of the calendar, where the desired date and time are displayed.

These electronic display boards are such that the format of the information to be posted by the user is predetermined, wherein the method is regulated by the information terminal apparatus used by the user and the contents management system of the electronic display boards. In Laid-Open Japanese Patent Application Publication No. 2005-11318, for example, the posted information is displayed only at a predetermined position on a screen, inhibiting the user from displaying information at any position. Thus, the user has not conventionally been given the means for utilizing the visual information obtained from the display screen.

### SUMMARY OF THE INVENTION

In consideration of the above described problem, the present invention aims to provide a communication method, an information terminal apparatus, and a communication system comprising these, which are capable of actively utilizing the visual information obtained from a display screen.

In order to accomplish the aforementioned aim, the communication method according to an aspect of the present invention is a communication method, in which a display apparatus and an information terminal apparatus perform communication via a network, including: inputting a display position of data to be displayed on a display unit of the display apparatus to an input unit of the information terminal apparatus; transmitting ID information for identifying the data and position information indicating the display position from the information terminal apparatus to the display apparatus; and displaying the data identified by the ID information on the display unit of the display apparatus on the basis of the position information.

Further, in order to accomplish the aforementioned aim, an information terminal apparatus according to an aspect of the present invention includes: an input unit to which a display position of data to be displayed on a display unit of a display apparatus is input; a control unit for generating position information indicating the display position; and a communication unit for transmitting both ID information for identifying the data and the position information to the display apparatus.

Further, in order to accomplish the aforementioned aim, a display apparatus according to an aspect of the present invention includes: a communication unit for receiving both ID information for identifying data and position information indicating a display position of the data from an information terminal apparatus; and a display unit for displaying the data identified by the ID information on the basis of the position information.

Further, in order to accomplish the aforementioned aim, in a communication system according to an aspect of the present invention, the aforementioned information terminal apparatus and display apparatus, which perform communication via a network.

The present invention enables a user belonging to a community such as home, workplace, school, and the like, to display, at any position of a display screen, information written to any of various information services such as calendar system, message board system, schedule and management system, which are provided by the community via a network. Since the user can particularly specify the display position of data that is displayed on the display screen of the information service and display the data at the desired position, the user can actively utilize the visual information obtained from the display screen of the information service.

The further characteristics and benefits of the present invention are more clarified by the embodiments described in the following.

### BRIEF DESCRIPTION OF THE DRAWINGS

Fig. 1 is a block diagram illustrating the configuration of a communication system according to an embodiment of the present invention;
Fig. 2 is a block diagram illustrating the configuration of a display apparatus and that of an information terminal apparatus according to an embodiment of the present invention, wherein
Fig. 2A is a configuration diagram illustrating the configuration of a display apparatus according to the present embodiment, and
Fig. 2B is a configuration diagram illustrating the configuration of an information terminal apparatus according to the present embodiment;
Fig. 3 is a flow chart for describing the operating procedure for reading an information service in a communication system according to an embodiment of the present invention;
Fig. 4 is a diagram for describing the operating procedure of writing to an information service in a communication system according to an embodiment of the present invention; and
Fig. 5 is a diagram showing an example of html fragment information according to an embodiment of the present invention.

### DETAILED DESCRIPTION OF PREFERRED EMBODIMENTS

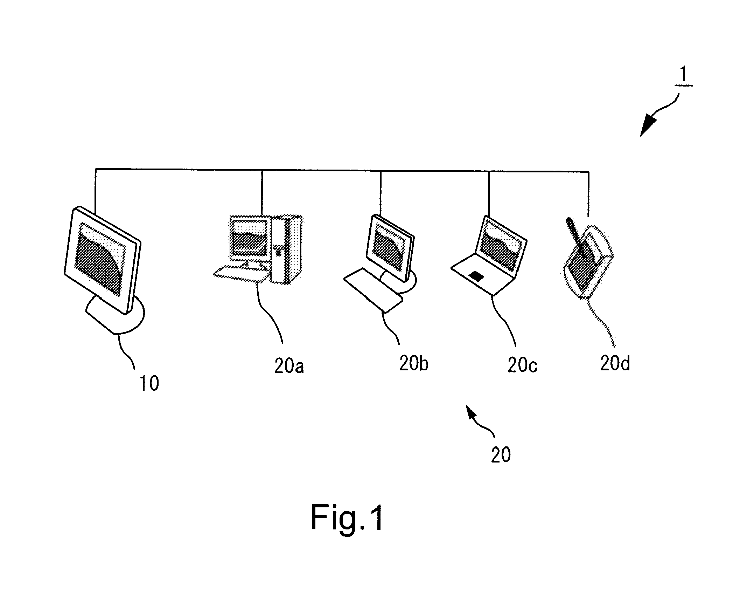

The following is the description of a communication system 1 according to an embodiment of the present invention with reference to the accompanying drawings. Fig. 1 is a block diagram illustrating the overall configuration of a communication system according to an embodiment of the present invention. As shown in the figure, a display apparatus 10 and one or a plurality of information terminal apparatuses 20 (i.e., 20a through 20d) perform communication via a network in the communication system 1.

The individual terminal apparatuses (i.e., display apparatus 10 and information terminal apparatuses 20) constituting the communication system 1 are connected to a wireless communication network, such as a wireless local area network (LAN), through which these apparatuses are capable of communication. Therefore, as data transmission means among the individual terminal apparatuses (i.e., between the display apparatus and information terminal apparatuses), various wireless communication networks such as wireless LAN, mobile wireless communication using Femto base stations, Bluetooth, can be utilized.

Further, a common communication system is such that authentication between users and authentication for confirming the availability of the communication system are performed when establishing a communication path between individual terminal apparatuses. The communication system 1 according to the present invention is also such that authentication between the display apparatus 10 and information terminal apparatuses 20 and authentication for the communication system are carried out using the existing standard authentication system. The details of them are not described herein.

Further, the communication system 1 may also be configured by utilizing Extensible Messaging and Presence Protocol (XMPP), in which the display apparatus 10 and one or a plurality of information terminal apparatuses 20 carry out communication in compliance with XMPP via a network. Such a configuration enables messaging (i.e., information exchange) in real time between the display apparatus and information terminal apparatus. The following description assumes the communication system 1 carries out communication in compliance with XMPP.

Here, the description is given to XMPP that is utilized by the communication system 1 according to the present embodiment. The XMPP is an XML-base protocol that the XMPP Standards Foundation (XSF), which has been separated from the XMPP Working Group of the Internet Engineering Task Force (IETF), has been facilitating the standardization of XMPP. Further, XMPP consists of a plurality of extension protocols (XMPP Extension Protocol (XEP)) standardized in accordance with various specific purposes in order to dynamically control wide range of applications such as instant messaging, presence ("the current state of the other party"), multi-point voice chat, voice phone or video phone, collaborative work, contents syndication, generalized routing of XML data, and to perform a real-time communication in a communication system such as the Internet.

For example, XEP-0071 (Xhtml-IM) is a specification related to the exchange of instant messages that contain lightweight text markup (i.e., tagging) using a subset of the html. This protocol makes it possible to format a message using a small range of commonly-used HTML elements, attributes, and style properties, which are suitable for use in instant messaging.

Further, XEP-0174 (Serverless Messaging) specifies real-time communication. This protocol enables any two entities to set up a serverless connection using XML streams.

Information provided by these information services is displayed on a display screen on the basis of display information that individually corresponds to each of the information services. This display information includes both data (e.g., text data, image data, voice data, video data) of a format that can be expressed in Hyper Text Markup Language (html) that is suitable to communication in compliance with XMPP, and meta information (described later) that is information (i.e., attribute information) related to the aforementioned data. One or plural pieces of data included in the display information are, for example, text data, image data, voice data and video data, and are extended to handle data of all types of formats that can be expressed by the Hyper Text Markup Language (html) that is suitable to communication in compliance with XMPP, and are not limited by the combination of the aforementioned data. Further, one or plural pieces of data included in the display information includes display data (i.e., base data) that constitutes a main body of the information service corresponding to the display information.

Further, the meta information is information (i.e., attribute information) related to one or plural pieces of data included in the display information and includes attribute information corresponding to messaging by the XMPP such as data ID (i.e., ID information) and position information (which are described later). Further, for the display information, the corresponding meta information is generated for each piece of data. Further the display information includes, as meta information, attribute information corresponding to messaging by the XMPP, such as data ID (i.e., ID information) and position information. That is, the display information includes a unique data ID (i.e., ID information) for identifying data, and position information indicating a display position of the data to be displayed on a display screen of a terminal apparatus. In addition, the meta information may be extended for managing "generation time and date information" indicating the generated time and date of the data, "valid time limit information" indicating the valid time limit of the data, and "update time and date information" indicating the latest time and date of changing the content of the data, and the like. Note that utilization of the attribute information corresponding to messaging by the XMPP (i.e., data ID (ID information), position information, and the like) as meta information is called an extension. Further note that the attribute information (i.e., data ID (ID information), position information, and the like) corresponding to messaging by the XMPP is called as extended attribute information.

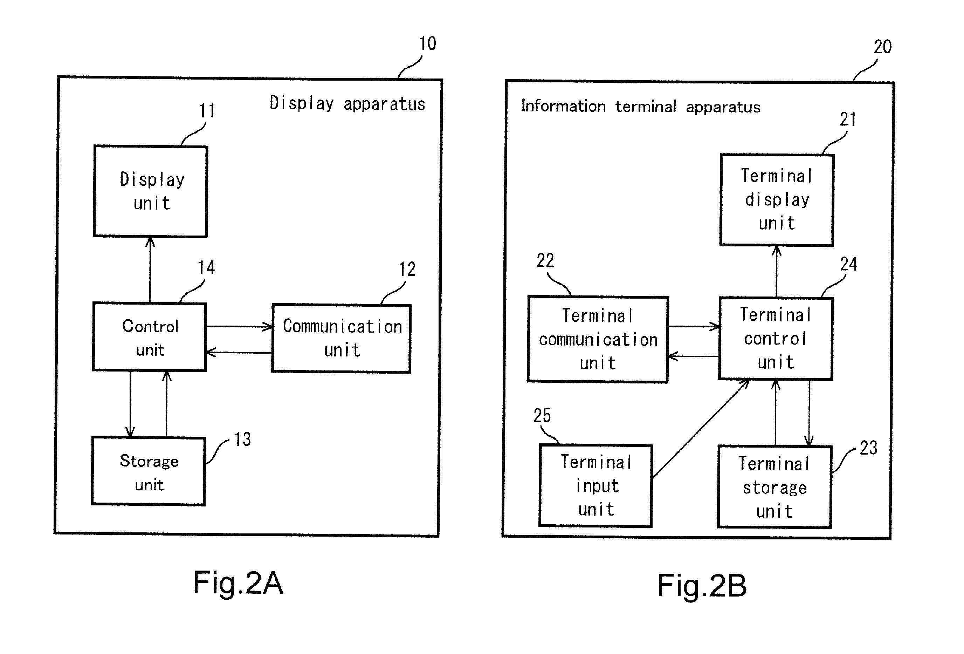

Next, a specific configuration of the individual terminal apparatuses (i.e., display apparatus 10 and information terminal apparatus 20) comprised by the communication system 1 according to the present embodiment will be described in detail with reference to the accompanying figures. Fig. 2 is a block diagram illustrating the configuration of a display apparatus and that of an information terminal apparatus according to an embodiment of the present invention, wherein Fig. 2A is a configuration diagram illustrating the configuration of a display apparatus according to the present embodiment, and Fig. 2B is a configuration diagram illustrating the configurtation of an information terminal apparatus according to the present embodiment.

The display apparatus 10 is a terminal apparatus installed within the communication range of an access point of a wireless LAN and performs communication with the information terminal apparatus 20 via a network. The display apparatus 10 is capable of performing communication in compliance with XMPP and allows usage of a Document Object Model (DOM) as the internal data format of display information in order to display on a display screen the information provided by a calendar system. Further, the display apparatus 10 comprises a display unit 11 for displaying data; a communication unit 12 for transmitting and receiving information to and from other terminal apparatuses; a storage unit 13 for storing information transmitted and received by the communication unit 12 and display information; and a control unit 14 for controlling the display unit 11, the transmission and receiving operations at the communication unit 12, and the storing and reading operations for information at the storage unit 13. Further, the storage unit 13 stores the display information of an information service that each terminal apparatus is allowed to use in the communication system 1. And the control unit 14 is also configured to edit and reconfigure display information, create and modify meta information (i.e., data ID (ID information), position information, and the like) that are included in the display information, and create an html document described by the html from the entirety of display information, when required.

Note that DOM is an application program interface (API) standardized for the html and extensible markup language (XML), and is standardized by the World Wide Web Consortium (W3C). Use of the DOM makes it possible to dynamically access a program and a script independently of platform or language, and to handle, as objects, contents (e.g., text data, image data, voice data), and the structure (i.e., a layout) and style when displaying the contents. Furthermore, the DOM also functions as interface for controlling using a script language such as JavaScript. Generally speaking, a Web page and an XML page, which are displayed when using the Internet, or the like, can be defined as a document described by html, XML and the like.

Further, the information terminal apparatus 20 is a terminal apparatus for communicating, via a network, with the display apparatus 10 comprising a display unit 11 and capable of performing communication in compliance with XMPP. The information terminal apparatus 20 comprises a terminal display unit 21 (i.e., a display unit); a terminal communication unit 22 (i.e., a communication unit) for transmitting and receiving information to and from other terminal apparatus (i.e., display apparatus 10); a terminal storage unit 23 (i.e., a storage unit) for storing information transmitted and received by the terminal communication unit 22 and also display information in order to display on a display screen the information provided by an information service; a terminal control unit 24 (i.e., a control unit) for controlling the terminal display unit 21, the transmission and receiving operations performed at the terminal communication unit 22 and the operations of storing and reading information performed at the terminal storage unit 23; and a terminal input unit 25 (i.e., an input unit) to which a user inputs data to be displayed on the display unit 11 of the display apparatus 10 and the display position of the input data. An exemplary case of the information terminal apparatus 20 may be named, for example, a portable information apparatus such as portable phone and personal digital assistant (PDA). Other types of terminal apparatuses may be used provided that each of them comprises a communication function. The terminal control unit 24 is also configured to, when required, edit and reconfigure the display information, and generate and modify meta information (i.e., data ID (ID information), position information, and the like) that is included in the display information. Note that the information terminal apparatus 20 uses an html document described by the html as display information in order to display a calendar system on a display screen.

Next, the procedure for a user to utilize an information service in the communication system 1 according to the present embodiment will be specifically described by exemplifying a calendar system used within a specific community such as university and work place with reference to the accompanying drawings.

### <Establishment of a communication path, and operation of reading a calendar system>

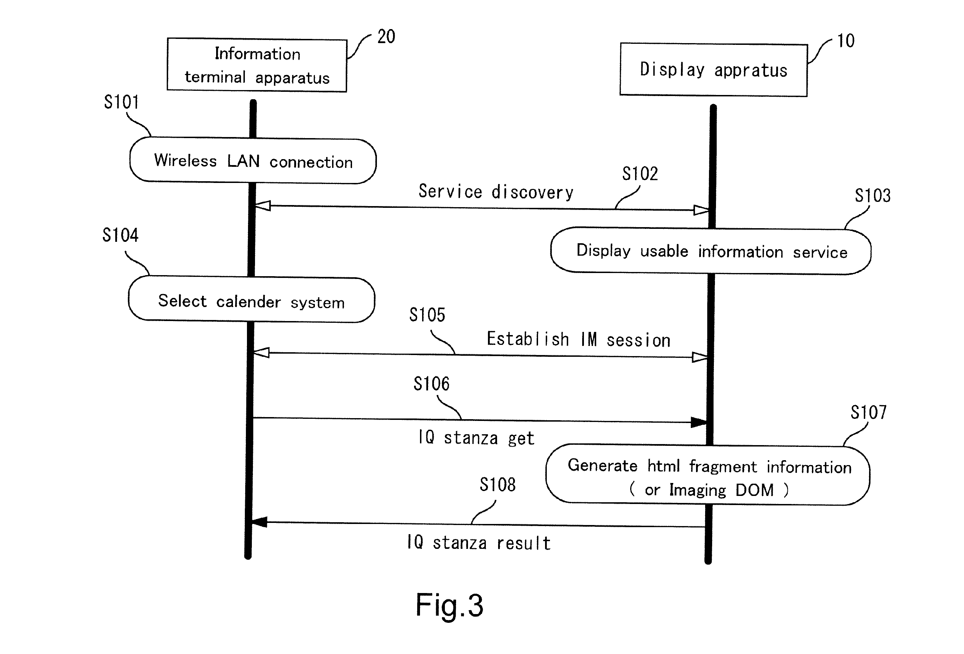

First, a case in which a user reads a calendar system to the information terminal apparatus 20 from the display apparatus 10 will be described. Fig. 3 is a flow chart for describing the procedure of an operation for reading an information service in a communication system according to an embodiment of the present invention.

When a community member A (i.e., a user) with an information terminal apparatus 20 enters a community room, the information terminal apparatus 20 enters an accessible zone to the display apparatus 10, thus the information terminal apparatus 20 detects that the display apparatus 10 is accessible (S101).

Further, in case of XEP-0174 (Serverless Messaging) of the XMPP, the information terminal apparatus 20 uses a multicast-Domain Name System (mDNS) to search the display apparatus 10 for an available information service (S102). Then the display apparatus 10 shows the information terminal apparatus 20 and its user one or plurality of usable information services in the communication system 1 such as calendar system and scheduling system (S103). Specifically, the display apparatus 10 searches for one or plurality of information services that correspond(s) to the display information stored in the storage unit 13 and that the information terminal apparatus 20 can use, and displays the search result on the display unit 11.

On seeing a list of usable information services displayed on the display unit 11, the user operates the terminal input unit 25 to select the desired information service. Note that the following description of the present embodiment assumes the calendar system is selected as the desired information service (S 104).

Thus, the display apparatus 10 and information terminal apparatus 20 establishes a communication path, and thereby establishes a mutually communicable state, by establishing an instant messaging (IM) session in compliance with XEP-0174 (Serverless Messaging) of theXMPP(S105).

Then, the information terminal apparatus 20 transmits from the terminal communication unit 22 to the display apparatus 10 the request for sending the calendar system, which is the desired information service, so that the user-selected calendar system will be transmitted to the information terminal apparatus 20 (S106).

The display apparatus 10 then receives the request at the communication unit 12, reads display information for displaying the requested calendar system from the storage unit 13, and generates display information (i.e., an html document) described by the html from the entirety of the display information (i.e., DOM) of the calendar system (S107). Then the display apparatus 10 transmits the display information (i.e., the html document) to the information terminal apparatus 20 from the communication unit 12 (S108). Here, the display information transmitted from the communication unit 12 to the information terminal apparatus 20 includes both one or plural pieces of data to be displayed on the display unit 11, and meta information (i.e., data ID (ID information), position information, and the like) corresponding to each piece of data.

Here, the display information for displaying on the display unit 11 the data provided by the calendar system not only includes one or plural pieces of data (e.g., text data, image data, voice data, video data), which include base data constituting a main body of a calendar system, but also include, for each piece of data, extended attribute information such as unique data ID (i.e., ID information) for identifying data and position information indicating a display position of the data to be displayed on the display unit 11 as meta information. Note that the display information may be configured to additionally include user information indicating an owner of the data, generation time and date information indicating generated time and date of the data, valid time limit information indicating valid time limit of the data, and update time and date information indicating latest time and date of changing the contents of the data, as meta information.

The aforementioned configuration makes it possible for the user to read the calendar system, which is the desired information service, to the information terminal apparatus 20. In the process S107, the display apparatus 10 may alternatively transmit to the information terminal apparatus 20 a snap shot of entire display information for displaying a calendar system, that is, an independent image data that is transformed from display content of the calendar system based on the display information, instead of transmitting display information. And in S108, the information terminal apparatus 20 may alternatively display the received image data on the terminal display unit 21.

### <Operation of writing to a calendar system>

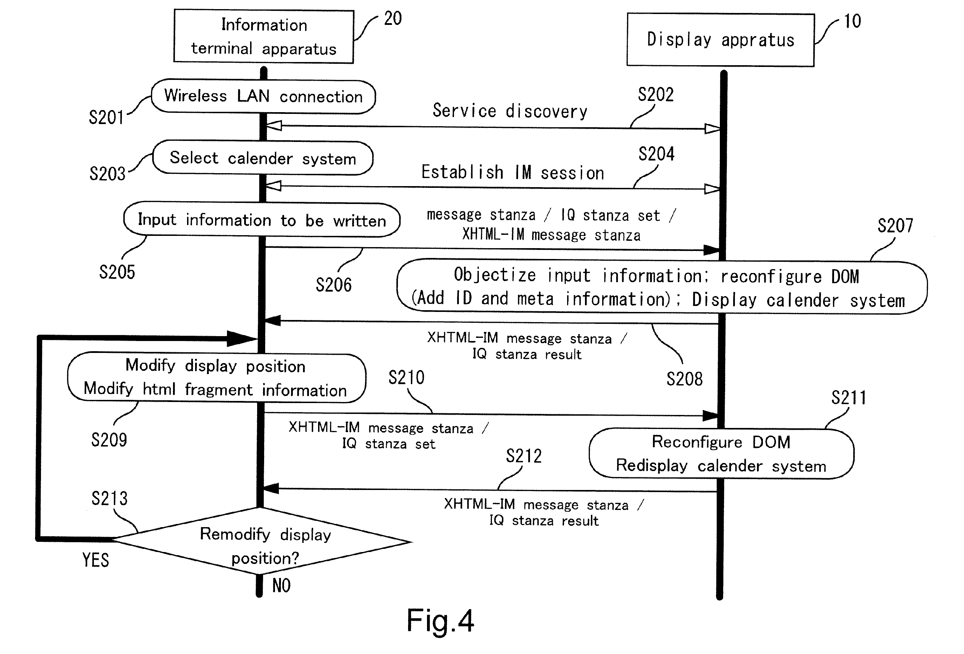

Next, a case where a user writes information to a calendar system from the information terminal apparatus 20 is described. Fig. 4 is a diagram for describing the procedure of writing operations to an information service according to an embodiment of the present invention.

First, when a community member A (i.e., a user) with an information terminal apparatus 20 enters a community room, the information terminal apparatus 20 enters an accessible zone to the display apparatus 10, thus the information terminal apparatus 20 detects that the display apparatus 10 is accessible (S201).

Further, in case of XEP-0174 (Serverless Messaging) of the XMPP, the information terminal apparatus 20 uses a multicast-Domain Name System (mDNS) to search the display apparatus 10 for an available information service (S202). At this time, the display apparatus 10 also shows the information terminal apparatus 20 and its user one or plurality of usable information services in the communication system 1 such as calendar system and scheduling system. Specifically, the display apparatus 10 searches for one or plurality of information services that correspond(s) to the display information stored in the storage unit 13 and that the information terminal apparatus 20 can utilize, and displays the search result on the display unit 11.

On seeing a list of usable information services displayed on the display unit 11, the user operates the terminal input unit 25 to select the desired information service. Note that the following description of the present embodiment assumes that the calendar system is selected as the desired information service (S203).

Thus the display apparatus 10 and information terminal apparatus 20 establishes a communication path, and thereby establishes a mutually communicable state, by establishing an instant messaging (IM) session in compliance with XEP-0174 (Serverless Messaging) of the XMPP (S204).

Then, the member A (i.e., the user) operates the terminal input unit 25 to input to the information terminal apparatus 20 the data to be written to the calendar system such as the event name of the community (named "text" hereinafter) (S205).

Then, the information terminal apparatus 20 converts the input "text" into a simple XMPP Message or a formatted text Message and transmits it to the calendar system of the display apparatus 10 using XEP-0071 (XHTML-IM) of the XMPP (S206). At this time, the information terminal apparatus 20 may store the input "text" in the terminal storage unit 23. Note that XEP-0071 (XHTML-IM) of the XMPP uses a subset of Xhtml when transmitting/receiving and displaying a simple XMPP Message or a formatted text Message.

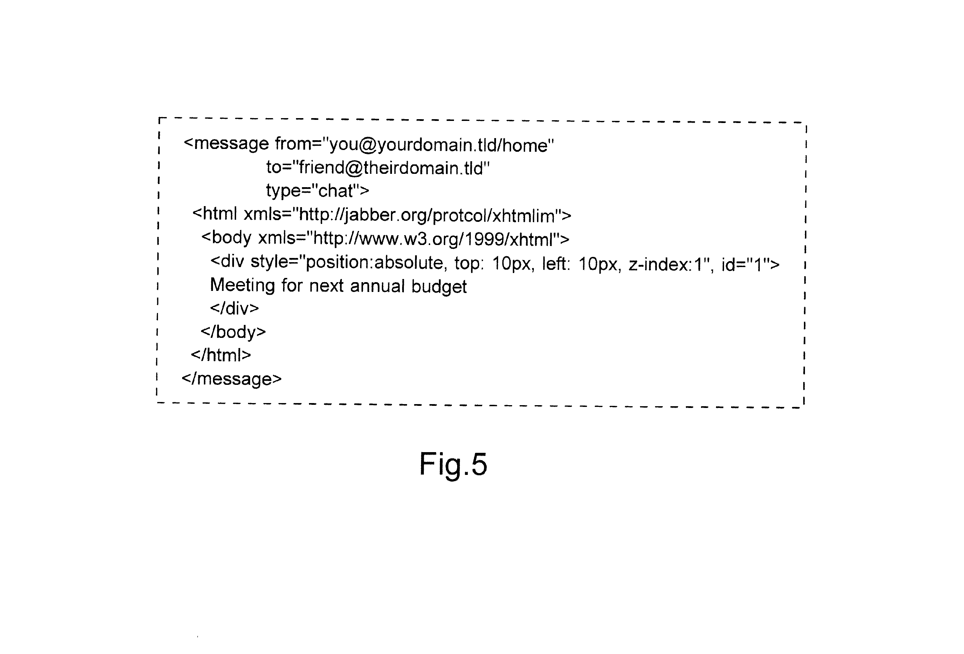

The display apparatus 10 receives the "text" from the information terminal apparatus 20 and generates an object that is described by the html and surrounded by <div> tags (called "html fragment information" hereinafter) from the received simple text or formatted "text". Fig. 5 is a diagram showing an example of html fragment information according to an embodiment of the present invention. As shown in Fig. 5, the generated html fragment information comprises position information and data ID (i.e., ID information), as meta information, in addition to the "text". Then the display apparatus 10 reconfigures the display information so as to add the generated html fragment information to the display information of the calendar system (S207). In this event, the meta information such as the position information and data ID (i.e., ID information) is added to the reconfigured display information. The reconfigured display information is stored in the storage unit 13.

Here, the html fragment information generated by the display apparatus 10 is an html file with extended meta information. The html file with extended meta information comprises data (e.g., text data, image data, voice data, video data) in a format expressible by the Hyper Text Markup Language (html) that is suitable to communication in compliance with XMPP, and the meta information that is the information (i.e., attribute information) related to the aforementioned data. The meta information includes attribute information corresponding to the messaging by the XMPP, such as data ID (ID information) and position information. Such a configuration makes it possible to transmit and receive data (e.g., text data, image data, voice data, video data) of all formats, which are expressible by the html, between the display apparatus and information terminal apparatus without being limited by the combination of aforementioned types of data, as long as the data is expressed by the html that is suitable to communication in compliance with XMPP. Here, note that the html fragment information includes "text" and the attribute information (i.e., data ID (ID information) and position information) related to the "text".

Further, when generating html fragment information from the received "text", the display apparatus 10 not only generates a data ID (i.e., ID information) for identifying the "text" possessed by the html fragment information, as the meta information having the information related to the "text". Additionally, the display apparatus 10 determines a temporary display position, which is used when displaying the "text" on the display unit 11, at a predetermined display position on the display screen of the display unit 11 and also generates position information indicating the display position of the "text" to be displayed on the display unit 11.

An alternative configuration may be such that the display apparatus 10 generates "generation time and date information" indicating the generated time and date of "text", "valid time limit information" indicating the valid time limit of the "text", and "update time and date information" indicating the latest time and date of changing the content of the "text", in addition to generating the data ID (i.e., ID information) and position information, and handles these generated data (i.e., data ID (ID information), position information, generation time and date information, valid time limit information, and update time and date information) as the meta information of the html fragment information.

For position information of the "text" to be displayed on the display unit 11 of the display apparatus 10, the position information may directly indicate absolute coordinates predefined on the display screen, for example, or may indicate a relative display position relative to a display position of other piece of data (e.g., base data constituting a main body of a calendar system, and the like) that is displayed on the display unit 11. Thus, when a calendar system is displayed in full screen (that is, when it is displayed on the entire frame of a display screen), or when a calendar system is displayed on a part of a display screen, a "text" is displayed at a relative display position relative to a display position of base data of the calendar system, even if the display position of the base data of the calendar system is changed. And the "text" is not displayed in such a manner to be displaced relative to other displayed data such as the base data of the calendar system. Therefore, the configuration makes it possible to display the "text" at the appropriate position relative to the calendar system that is displayed on a part of the display screen.

Then, the display apparatus 10 transmits the html fragment information generated in step S207 to the information terminal apparatus 20 from the communication unit 12 using XEP-0071 (XHTML-IM) of the XMPP (S208).

On seeing the display screen of the display unit 11 of the display apparatus 10, the user can modify the display position of the "text" that is displayed on the display unit 11 by operating the terminal input unit 25 to input the position of displaying the "text" (S209). Here, the modification of the display position of the "text" may use the method of inputting numerical values of the coordinates on the display screen of the display unit 11 from the terminal input unit 25, or the method of displaying a reduced image of the calendar system and the "text" on the terminal display unit 21, operating a touch panel, mouse or the like of the terminal input unit 25 to drag and drop the "text" displayed on the display screen and move the "text" to the desired position, thereby designating the display position.

Further in S209, associated with the modification of the display position of the "text", the information terminal apparatus 20 modifies the position information of the "text" to the user-input display position and also modifies the html fragment information so as to be consistent with the aforementioned modification, and stores the result in the terminal storage unit 23. Specifically, the terminal control unit 24 of the information terminal apparatus 20 modifies the position information of the "text" to the position information indicating the user-input display position, and also other meta information (i.e., generation time and date information, valid time limit information, update time and date information, and the like) that are related to the "text". In this event, however, the data ID (i.e., ID information) for identifying the "text" is left unchanged.

Note that the position information of the "text" modified by the terminal control unit 24 at this time may be alternatively modified to information indicating a relative display position relative to a display position of other data (e.g., base data constituting a main body of a calendar system, and the like) that is already displayed on the display unit 11, as a display position of the "text" to be displayed on the display unit 11 of the display apparatus 10.

Thus, the display position of the "text" indicated by the position information can be indicated by a relative display position relative to the display position of the other display data (e.g., base data constituting the main body of the calendar system, and the like) that is displayed on the display unit 11 of the display apparatus 10. Thus, when a calendar system is displayed in full screen (that is, when it is displayed on the entire frame of a display screen), or when a calendar system is displayed on a part of a display screen, a "text" is displayed at a relative display position relative to a display position of other display data (e.g., base data of the calendar system), even if the display position of the base data of the calendar system or the like is changed. And the "text" is not displayed in such a manner to be displaced relative to other display data (e.g., the base data of the calendar system). Therefore, the configuration makes it possible to display the "text" at the appropriate position relative to the calendar system that is displayed on the display unit 11 of the display apparatus 10.

Further in this event, the user is able to edit or modify the contents of the meta information (i.e., position information, generation time and date information, valid time limit information, update time and date information, and the like) other than the content of the "text" and the data ID (i.e., ID information) that corresponds to the "text" by operating the terminal input unit 25. For instance, the user may have the terminal display unit 21 of the information terminal apparatus 20 display the reduced image of the calendar system and the "text", and operate a touch panel or a mouse of the terminal input unit 25 and hold the "click" button pressed while overlapping a cursor on the "text" displayed on the display screen of the terminal display unit 21, and thereby establishing a state in which the content of the "text" and the meta information can be edited or modified. Then the user specifies the target to be edited or modified (i.e., the content of "text" and the meta information related to the "text"), thereby inputting the contents to be edited or modified. Then, the html fragment information is modified once again on the basis of thus edited or modified "text" and meta information, and is stored in the terminal storage unit 23.

Then, the information terminal apparatus 20 transmits the html fragment information, which includes both the data ID (i.e., ID information) for identifying the "text" and the position information indicating the display position of the "text" input from the terminal input unit 25, to the display apparatus 10 (S210).

On the basis of the received html fragment information, the display apparatus 10 reconfigures the display information for displaying the information provided by the calendar system on the display unit 11, and stores the reconfigured information in the storage unit 13 (S211). In this event, the information, which is provided by the calendar system and displayed on the display unit 11, is redisplayed on the basis of the reconfigured display information. The display apparatus 10 further modifies the html fragment information on the basis of the reconfigured display information. Specifically, it modifies the meta information of the html fragment information.

Then the display apparatus 10 transmits the modified html fragment information to the information terminal apparatus 20 (S212).

Here, on seeing the display screen of the display unit 11 of the display apparatus 10, the user inputs the position of displaying the "text" by operating the terminal input unit 25 and thereby is able to modify yet again the display position of the "text" displayed on the display unit 11 (S213). If the user needs to modify yet again the display position of the "text" ("yes" for S213), the aforementioned procedures of steps S209 through S212 will be repeated. In contrast, if the user does not need to modify the display position of the "text" ("no" for S213), the operation of writing to the calendar system ends. Here, an alternative configuration may be such that the information terminal apparatus 20 displays a message, or the like, on the terminal display unit 21, asking to validate whether or not the display position of the "text" needs to be modified once again and having the user operate the terminal input unit 25 and input whether or not to carry out a modification, thereby judging the presence or absence of a modification.

The above described configuration enables the user to input the display position of the "text" to be displayed on the display unit 11 of the display apparatus 10 by operating the terminal input unit 25 of the information terminal apparatus 20 to display the "text" at a desired position on a display screen of the display unit 11. Therefore, the user belonging to a community such as home, work place, and school, is enabled to display at any position of a display screen the information written to any of various information services such as calendar system, message board system, schedule management system, and the like, which are provided by the community via a network. The user is enabled to particularly specify the display position of data that is displayed on the display screen of an information service, thereby displaying the data at the desired position, and therefore is enabled to actively utilize the visual information obtained from the display screen of the information service.

Note that the aforementioned embodiment is configured such that html fragment information, which comprises a data ID (i.e., ID information) and position information, is fragment information that constitutes display information for displaying "text" on the display unit 11 of the display apparatus 10. Thus, when a display position of data to be displayed on a display unit 11 of a display apparatus 10 is intended to be changed by operating a information terminal apparatus 20, and if fragment information, which comprises both data ID (i.e., ID information) for identifying the data and position information indicating the display position of the data, is transmitted to the display apparatus 10 from the information terminal apparatus 20, the display apparatus 10 can display the data identified by the data ID (i.e., ID information) on the display unit 11 on the basis of the position information incorporated in display information that has been edited on the basis of the received fragment information (i.e., data ID (i.e., ID information) and position information). Therefore, the user who uses the information terminal apparatus 20 is able to easily change the display position of data to be displayed on the display unit 11. Further, it is possible to reduce the amount of information sent from the information terminal apparatus 20 to the display unit 10, shortening the time required for communication and accordingly reducing greatly the load levied on the communication path between the display apparatus 10 and information terminal apparatus 20. The user in turn is able to carry out communication more conveniently.

The above description has been provided for the procedure for a member A (i.e., a user) of a community using a calendar system in the communication system 1 according to the present embodiment. Also, the above description is about a case in which an information terminal apparatus 20 held by the member A (i.e., the user) communicates with the display apparatus 10. In this case, there may be a plurality of information terminal apparatuses 20 communicating with the display apparatus 10. That is, multiple users may use their respective information terminal apparatuses 20 to communicate with the display apparatus 10 via a network. Each piece of data displayed on the display unit 11 of the display apparatus 10 is correlated with a data ID (i.e., ID information) for identifying the piece of data and position information indicating the display position of the piece of data, as meta information. Therefore, even if the multiple users intend to change the display position of data displayed on the display unit 11 respectively, the data identified by a data ID (i.e., ID information) can be certainly displayed at a display position indicated by the position information that is correlated with the data on the basis of the data ID (i.e., ID information) and position information, which are received from the information terminal apparatus 20 possessed by each user. This in turn enables the multiple users to more actively utilize the visual information obtained from the display screen and easily share the information by way of an information service (i.e., a calendar system, or the like) that is displayed on the display screen.

Note that the present invention is not limited by the above described embodiment, but the present invention may be embodied with the configurations changed within the spirit and scope of the present invention. For instance, the above described embodiment is configured to carry out communication between the display apparatus 10 and information terminal apparatus 20 in compliance with XMPP; the present invention, however, is not limited to such configuration. An alternative configuration may be such that the display apparatus 10 and information terminal apparatus 20 perform communication in compliance with a protocol similar to the XMPP.

In the above described embodiment, the display apparatus and information terminal apparatus perform communication via a wireless communication network. Both the apparatuses, however, may perform communication via a wire communication network such as a LAN. Further, according to the present invention, the terminal apparatuses constituting the communication system 1 may not necessarily comprise a server for use of the XMPP communication. A configuration not including an XMPP communication-use server makes it possible to eliminate a server/client distinction among individual terminal apparatus and a master/slave relationship between any terminal apparatuses. Further, there is no need to set up a dedicated XMPP communication-use server, thus reducing the cost for building or maintaining a communication system among individual terminal apparatuses.

The present invention is applicable to communication method in which information is read and written between an information terminal apparatus and display apparatus, and in which these pieces of information are mutually usable therebetween; an information terminal apparatus; a display apparatus; and a communication system comprising these. The present invention further enables users belonging to a community such as home, work place, school, to write information to any of various services such as calendar system, message board system, schedule management system, and the like, which are provided by the community via a network, and display the information at any position of a display screen. The present invention enables the user to particularly specify the display position of data that is displayed on the display screen of the information service, and display the data at the desired position, thereby enabling the user to actively utilize the visual information obtained from the display screen of the information service. In case of the data expressed by the html that is suitable to communication in compliance with XMPP, the user can send and receive data (e.g., text data, image data, voice data, video data) in all formats expressible by the html without being limited by the combination of the aforementioned data.

In order to accomplish the aforementioned aim, the communication method according to the present invention may be a communication method, in which a display apparatus and an information terminal apparatus perform communication via a network, comprising: inputting a display position of data to be displayed on a display unit of the display apparatus to an input unit of the information terminal apparatus; transmitting ID information for identifying the data and position information indicating the display position from the information terminal apparatus to the display apparatus; and displaying the data identified by the ID information on the display unit of the display apparatus on the basis of the position information.

The communication method configured as described above enables a user belonging to a community such as home, workplace, school, and the like, to display, at any position of a display screen, information written to any of various services such as calendar system, message board system, schedule management system, which are provided by the community via a network. The communication method enables the user to particularly specify the display position of data that is displayed on the display screen of the information service, and display the data at the desired position, thereby enabling the user to actively utilize the visual information obtained from the display screen of the information service.

The communication method configured as described above may also be such that the position information indicates a relative display position relative to a display position of second data that is displayed on the display unit, as a display position of first data to be displayed on the display unit.

With the configuration as described above, position information is expressed in such a manner that a display position of first data identified by ID information can be indicated by a relative display position relative to position information of second data that is already displayed on a display screen of an information service such as a calendar system. Therefore, even if an information service displayed on a display unit of a display apparatus is displayed at a part of a display screen and a display position of a second data displayed on the display unit is changed, first data identified by ID information can be displayed at a relative display position relative to a display position of second data on the basis of a position information.

Here, a case will be described, in which position information indicates, for example, a relative display position relative to a display position of base data of a calendar system as a display position of data identified by ID information. In this case, even if the calendar system is displayed on a part of a display screen and the display position of the base data of the calendar system is changed, the data identified by the ID information can be displayed at a relative display position relative to the display position of the base data on the basis of the position information. That is, the data identified by the ID information is not displayed in such a manner to be displaced relative to the base data. Therefore, it is possible to display data identified by ID information at an appropriate position.

Further, the communication method configured as described above may alternatively be such that the display apparatus and information terminal apparatus perform communication in compliance with Extensible Messaging and Presence Protocol (XMPP). Such a configuration enables real-time messaging (i.e., information exchange) between the display apparatus and information terminal apparatus.

Note that the XMPP is an XML-base protocol that the XMPP Standards Foundation (XSF), which has been separated from the XMPP Working Group of the Internet Engineering Task Force (IETF), has been facilitating the standardization of XMPP. Further, XMPP consists of a plurality of extension protocols (XMPP Extension Protocol (XEP)) standardized in accordance with various specific purposes in order to dynamically control wide range of applications such as instant messaging, presence ("the current state of the other party"), multi-point voice chat, voice phone or video phone, collaborative work, contents syndication, generalized routing of XML data, and to perform a real-time communication in a communication system such as the Internet.

Further, the communication method configured as described above may alternatively be such that the information that is mutually transmitted and received between the display apparatus and information terminal apparatus is an html file with extended meta information. Here, the html file with extended meta information comprises data (e.g., text data, image data, voice data, video data) of a format expressible by the Hyper Text Markup Language (html) that is suitable to communication in compliance with XMPP, and meta information that is information (i.e., attribute information) related to the data. The meta information includes attribute information corresponding to the XMPP messaging, such as ID information, and position information. Such utilization of the attribute information (i.e., ID information and position information) corresponding to the XMPP messaging as meta information is called the extension. Such a configuration makes it possible to transmit and receive data (e.g., text data, image data, voice data, video data) of all formats, which are expressible by the html, between the display apparatus and information terminal apparatus without being limited by the combination of aforementioned types of data, as long as the data is expressed by the html that is suitable to communication in compliance with XMPP.

Further, in the communication method configured as described above, the information that is mutually transmitted and received between the display apparatus and information terminal apparatus may be fragment information constituting display information for performing display on the display unit of the display apparatus. Thus, when a display position of data to be displayed on a display unit is intended to be changed by operating an information terminal apparatus, and if fragment information comprising ID information for identifying the data and position information indicating the display position of the data is transmitted from the information terminal apparatus to a display apparatus, the display apparatus can display the data identified by the ID information on the basis of the position information incorporated in display information that is edited on the basis of the received fragment information (i.e., ID information and position information). Therefore, a user who uses an information terminal apparatus is enabled to easily change a display position of data to be displayed on a display unit. Further, the above described configuration makes it possible to reduce the amount of information to be transmitted from an information terminal apparatus to a display apparatus, thereby shortening time required for communication and greatly reducing the load levied on a communication path between the display apparatus and the information terminal apparatus. This in turn enables the user to carry out communication more conveniently.

Further, in the communication method configured as described above, the display apparatus and the information terminal apparatus may perform communication via a wireless communication network. Such a configuration makes it possible to utilize various wireless communication networks, such as wireless LAN, mobile wireless communication using Femto base stations, Bluetooth, as data transmission means between the display apparatus and the information terminal apparatus.

Further, in order to accomplish the aforementioned aim, an information terminal apparatus according to the present invention may be an information terminal apparatus for performing communication with a display apparatus including a display unit via a network, the information terminal apparatus comprising: an input unit to which a display position of data to be displayed on the display unit is input; a control unit for generating position information that indicates the display position; and a communication unit for transmitting both ID information for identifying the data and the position information.

The information terminal apparatus configured as described above enables a user to display information at any position of a display screen, the information written to any of various information services provided via a network. The user is enabled to particularly specify the display position of data displayed on the display screen of an information service and display the data at the desired position, thereby being enabled to actively utilize the visual information obtained from the display screen of the information service.

In the information terminal apparatus configured as described above, the position information may indicate a relative display position relative to a display position of second data that is displayed on the display unit, as a display position of first data to be displayed on the display unit.

Such a configuration enables an information terminal apparatus to indicate a display position of first data, which is identified by ID information, in terms of a relative display position relative to a display position of second data that is already displayed on a display screen of an information service such as calendar system. Thus, when an information service displayed on a display unit of a display apparatus is displayed at a part of a display screen, and even if a display position of second data displayed on the display unit is changed, first data identified by ID information can be displayed at a relative display position relative to the display position of the second data on the basis of position information. When a calendar system, for example, is displayed at a part of a display screen and even if a display position of other display data such as base data of the calendar system is changed, data identified by ID information can be displayed at a relative display position relative to the display position of the other display data (e.g., the base data of the calendar system) on the basis of position information. That is, any data identified by ID information is not displayed in such a manner to be displaced relative to the other display data. Therefore, it is possible to display data identified by ID information at the appropriate position.

The information terminal apparatus configured as described above may alternatively be configured to perform communication with the display apparatus in compliance with XMPP. Such a configuration enables an information terminal apparatus to perform real-time messaging (i.e., information exchange) with a display apparatus.

In the information terminal apparatus configured as described above, information transmitted by the communication unit may be an html file with extended meta information. Here, the html file with extended meta information comprises data (e.g., text data, image data, voice data, video data) of a format expressible by the html that is suitable to communication in compliance with XMPP, and meta information that is information (i.e., attribute information) related to the data. The meta information includes attribute information corresponding to the XMPP messaging, such as ID information, and position information. Such utilization of the attribute information (i.e., ID information and position information) corresponding to the XMPP messaging as meta information is called the extension. Such a configuration enables the communication unit of the information terminal apparatus to transmit data (e.g., text data, image data, voice data, video data) of all formats expressible by the html that are suitable to communication in compliance with XMPP without being limited by the combination of data.

In the information terminal apparatus configured as described above, information transmitted by the communication unit may be fragment information constituting display information for performing display on the display unit of the display apparatus. Thus, when a display position of data to be displayed on a display unit of a display apparatus is intended to be changed, and if fragment information, which comprises ID information for identifying the data and position information indicating the display position of the data, is transmitted to the display apparatus from an information terminal apparatus, the display position of the data to be displayed on the display unit of the display apparatus can be easily changed. Further, such a configuration makes it possible to reduce the amount of information to be transmitted to the display apparatus, thereby shortening time required for communication and greatly reducing the load levied on the communication path between the information terminal apparatus and the display apparatus. This in turn enables the user to carry out communication more conveniently.

Further, in the information terminal apparatus configured as described above, the communication unit may perform the communication with the display apparatus via a wireless communication network. Such a configuration makes it possible to utilize various wireless communication networks, such as wireless LAN, mobile wireless communication using Femto base stations, Bluetooth, as data transmission means between the information terminal apparatus and the display apparatus.

Further, in order to accomplish the aforementioned aim, a display apparatus according to the present invention is an display apparatus for performing communication with an information terminal apparatus via a network, the display apparatus, including: a display unit; and a communication unit for receiving both ID information for identifying data to be displayed on the display apparatus and position information indicating a display position of the data to be displayed on the display unit, wherein the display unit displays the data identified by the ID information on the basis of the position information.

The display apparatus configured as described above enables a user to display, at any position of a display screen, information written to any of various information services provided via a network. The user is enabled to particularly specify the display position of data displayed on the display screen of an information service and display the data at the desired position, thereby being enabled to actively utilize the visual information obtained from the display screen of the information service.

Further, the display apparatus configured as described above may also be configured to perform communication with the information terminal apparatus in compliance with XMPP. Such a configuration enables a display apparatus to perform real-time messaging (i.e., information exchange) with an information terminal apparatus.

In the display apparatus configured as described above, information received by the communication unit may be an html file with extended meta information. Here, the html file with extended meta information comprises data (e.g., text data, image data, voice data, video data) of a format expressible by the html that is suitable to communication in compliance with XMPP, and meta information that is information (i.e., attribute information) related to the data. The meta information includes attribute information corresponding to the XMPP messaging, such as ID information, and position information. Such utilization of the attribute information (i.e., ID information and position information) corresponding to the XMPP messaging as meta information is called the extension. Such a configuration enables the communication unit of the display apparatus to receive data (e.g., text data, image data, voice data, video data) of all formats expressible by the html that are suitable to communication in compliance with XMPP without being limited by the combination of data.

Further, in the display apparatus configured as described above, information received by the communication unit may be fragment information constituting display information for performing display on the display unit. Thus, when a display position of data to be displayed on a display unit is intended to be changed, and if fragment information, which comprises ID information for identifying the data and position information indicating the display position of the data, is received from an information terminal apparatus, the display position of the data to be displayed on the display unit can be easily changed. Further, such configuration makes it possible to reduce the amount of information received from an information terminal apparatus, thereby shortening time required for communication and greatly reducing the load levied on the communication path between the display apparatus and the information terminal apparatus. This in turn enables the user to carry out communication more conveniently.

Further, in the display apparatus configured as described above, the communication unit may perform the communication with the information terminal apparatus via a wireless communication network. Such a configuration makes it possible to utilize various wireless communication networks, such as wireless LAN, mobile wireless communication using Femto base stations, Bluetooth, as data transmission means between the information terminal apparatus and the display apparatus.

Further, in order to accomplish the aforementioned aim, a communication system according to the present invention may be configured such that the above described information terminal apparatus and display apparatus perform communication via a network.

The communication system configured as described above enables a user to display, at any position of a display screen, information written to any of various information services provided via a network. The user is enabled to particularly specify the display position of data displayed on the display screen of an information service and to display the data at the desired position and thereby is enabled to actively utilize the visual information obtained from the display screen of the information service.

Further, the communication system configured as described above may alternatively be such that the information terminal apparatus and the display apparatus perform communication in compliance with XMPP. Such a configuration enables real-time messaging (i.e., information exchange) performed between the information terminal apparatus and display apparatus.

Further, in the communication system configured as described above may alternatively be such that the information terminal apparatus and the display apparatus perform communication via a wireless communication network. Such a configuration makes it possible to utilize various wireless communication networks, such as wireless LAN, mobile wireless communication using Femto base stations, Bluetooth, as data transmission means between the information terminal apparatus and display apparatus.

The present invention enables a user belonging to a community such as home, workplace, school, and the like, to display, at any position of a display screen, information written to any of various information services such as calendar system, message board system, schedule and management system, which are provided by the community via a network. Since the user can particularly specify the display position of data that is displayed on the display screen of the information service and display the data at the desired position, the user can actively utilize the visual information obtained from the display screen of the information service.

## Claims

1. A communication method, in which a display apparatus and an information terminal apparatus perform communication via a network, comprising:
inputting a display position of data to be displayed on a display unit of the display apparatus to an input unit of the information terminal apparatus;
transmitting ID information for identifying the data and position information indicating the display position from the information terminal apparatus to the display apparatus; and
displaying the data identified by the ID information on the display unit of the display apparatus on the basis of the position information.

2. The communication method according to claim 1, wherein
the position information indicates a relative display position relative to a display position of second data that is displayed on the display unit, as a display position of first data to be displayed on the display unit.

3. The communication method according to claim 1 or 2, wherein
the display apparatus and the information terminal apparatus perform the communication in compliance with XMPP.

4. The communication method according to claim 3, wherein
the information mutually transmitted and received between the display apparatus and the information terminal apparatus is a html file with extended meta information.

5. The communication method according to claim 4, wherein
the information mutually transmitted and received between the display apparatus and the information terminal apparatus is fragment information constituting display information for performing the display on the display unit of the display apparatus.

6. The communication method according to any of claims 1 to 5, wherein
the display apparatus and the information terminal apparatus perform the communication via a wireless communication network.

7. An information terminal apparatus for performing communication with a display apparatus including a display unit via a network, comprising:
an input unit to which a display position of data to be displayed on the display unit is input;
a control unit for generating position information indicating the display position; and
a communication unit for transmitting both ID information for identifying the data and the position information to the display apparatus.

8. The information terminal apparatus according to claim 7, wherein
the position information indicates a relative display position relative to a display position of second data that is displayed on the display unit, as a display position of first data to be displayed on the display unit.

9. The information terminal apparatus according to claim 7 or 8, wherein
the communication unit performs the communication with the display apparatus in compliance with XMPP.

10. The information terminal apparatus according to claim 9, wherein
the information transmitted from the communication unit to the display apparatus is a html file with extended meta information.

11. The information terminal apparatus according to any of claims 7 to 10, wherein
the information transmitted from the communication unit to the display apparatus is fragment information constituting display information for performing the display on the display unit of the display apparatus.

12. The information terminal apparatus according to any of claims 7 to 11, wherein
the communication unit performs the communication with the display apparatus via a wireless communication network.

13. A display apparatus for performing communication with an information terminal apparatus via a network, comprising:
a communication unit for receiving both ID information for identifying data and position information indicating a display position of the data from the information terminal apparatus; and
a display unit for displaying the data identified by the ID information on the basis of the position information.

14. The display apparatus according to claim 13, wherein
the communication unit performs the communication with the information terminal apparatus in compliance with XMPP.

15. The display apparatus according to claim 14, wherein
the information received by the communication unit from the information terminal apparatus is a html file with extended meta information.

16. The display apparatus according to any of claims 13 to 15, wherein
the information received by the communication unit from the information terminal apparatus is fragment information constituting display information for performing the display on the display unit.

17. The display apparatus according to any of claims 13 to 16, wherein
the communication unit performs the communication with the information terminal apparatus via a wireless communication network.

18. A communication system, wherein
the information terminal apparatus according to any of claims 7 to 12 and the display apparatus according to any of claims 13 to 17 perform communication via a network.

19. The communication system according to claim 18, wherein
the information terminal apparatus and the display apparatus perform the communication in compliance with XMPP.

20. The communication system according to claim 18 or 19, wherein
the information terminal apparatus and the display apparatus perform the communication via a wireless communication network.
